# EUROPEAN PATENT SPECIFICATION

(11) **EP 3 129 304 B1**
(45) Date of publication and mention of the grant of the patent: **16.01.2019**
(21) Application number: 15732929.3
(22) Date of filing: 02.04.2015
(51) Int. Cl.: B65G 1/137

(54) **WAREHOUSE AND RETRIEVAL TRUCK FOR WAREHOUSE**
LAGER UND BEDIENWAGEN FÜR DAS LAGER
ENTREPÔT ET CHARIOT DE RETRAIT POUR ENTREPÔT

(30) Priority: 07.04.2014 HU P1400194
(43) Date of publication of application: 15.02.2017
(73) Proprietor: Unix Auto Kft, 1139 Budapest (HU)
(72) Inventor: ZOMBORI, Antal, H-1037 Budapest (HU)
(74) Representative: Farkas, Tamas
(86) International application number: PCT/HU2015/000032
(87) International publication number: WO 2015/155556

(56) References cited:
- EP-A1- 1 086 910
- WO-A2-2010/100513
- DE-C- 957 200
- JP-U- H0 642 810
- US-A- 4 678 390
- US-A- 5 102 283
- US-B1- 7 381 022

## Description

The invention relates to a cargo handling system for warehouses according to the preamble of claim 1.

Widespread automatic cargo handling systems for warehouses have been developed for operating by looking up storing places of goods stored generally on racks in a warehouse and moving the storage unit, like a container, pallet, cage or box containing many items from the storing place to a packaging workstation. A self-propelled transporter-loader device of such a system is adapted to find the respective storage unit, moving it to a packaging workstation and delivering the desired item at the packaging workstation either manually or mechanically and to place it in a package along with other goods to be forwarded to its destination. The storage unit is then reshipped by the transporter-loader device to its appropriate storage place.

Most automated storage systems have the fundamental disadvantage that only one loader device can work in a single row of racks at the same time, so that the number of operation executable per unit of time in a particular warehouse, that is the number of moved storage units per unit of time, is determined by the maximum power of this device. Parallel operation of load-carrying elements, that is for work to be carried out at the same time and in the same shelf row is not possible. A similar solution is disclosed by the document US 6,929,440 B1, wherein the storage system comprises a number of shelves, which are arranged in several levels, and loading tracks extend horizontally along the shelving levels. Loading plates having guide members are located in front of each shelf areas. Transport means are arranged on guide members for which vertical conveyors lift up the crates or pallets loaded with commodity to be stored, which can be pushed to the shelf areas or drawn out therefrom by transport means horizontally running on the loading plates. Obvious drawback of this solution is that it is extremely investment intensive, because lifting equipment and means of transport must be installed for each shelf.

To overcome this drawback the patent document HU 229 022 proposes an arrangement for storage comprising a warehouse rack containing shelves located on columns, a handling machine movable to the designated shelf of the warehouse rack, and a handling device capable of placing goods or a storing device for storing goods on the shelves or retrieving them from the shelves and moving them to a designated location. A passive lifting device is associated with the warehouse rack and the handling machine is formed as a locomotive handling machine capable of moving on a prescribed path. The handling device is located on the handling machine, and that on the handling machine an active lifting device is arranged, which can be engaged with the passive lifting device and in cooperation with the passive lifting device moving the handling machine to a designated shelf.

This solution solves the problem of parallel operation mentioned above by managing storage units (boxes, pallets) by means of robots, since an active lifting device, which is preferably a driven cable drum mounted on a self-propelled loader structure, can be attached to a shelf-mounted passive device, preferably a rope, elevates himself like an elevator to the proper storage unit, for example a crate to be lifted out and delivered to the packing station. Thus, more than one self-propelled loader device or loading machine can work in a single row of shelves at a time increasing the number of storage units (e.g. crates) removed or placed during the same period of time. Though this solution is far more effective and its investment costs much less than that of the automatic ware management systems used previously, we must continue to reckon with the disadvantage that for obtaining only one or a few batch of commodity a whole storage unit (e.g. crates or pallets) must be transported to the packing station, where the necessary quantity of goods is removed from that storage unit - or inserted there into - and the storage unit must be transferred back to the storage area and placed for storage in the appropriate place on the shelf system. Removing, transferring and returning a storage unit (e.g. crate or pallet) all take a significant amount of time in the case of e.g. storing machine parts or usually in a commercial activity, with which only one or at most a few of a type of commodities must be delivered, and moving each necessary storage units takes a lot of time, or many robots must work at a time. In these cases, a number of boxes must be delivered to a packing point, in which only one or two commodities are to be removed, then the crate or pallet with the rest quantity must be returned. This process not only takes a long time, but also needs a lot of energy, for example a storage unit containing hundred items is to be removed from its storing place to remove only one piece to be delivered, and then the unit mist be transported back to the shelf system, with the remaining 99 pieces. Thus, 99% of the energy for transporting is used unnecessarily.

In contrast, with the warehouses of manual handling the warehouseman travels through the warehouse or a part thereof along a planned route and collects the products to be delivered in a collecting device (typically crates, pallets, etc). In this case a warehouseman takes off the shelf an amount of products just needed and no unnecessary handling of products occurs. Such a solution is disclosed by patent document US 2011142581 A1, wherein a method and an apparatus for manual order picking of items in an order-picking installation with a dynamic-storage rack as a store for the manual order picking are described. It is proposed that the items are automatically transported, preferably separately according to type, in containers or boxes to the dynamic-storage rack/flow shelf on a driven conveying line. After reading and identifying the containers, they are automatically introduced by an activated stationary lift and activated level conveyor unit of the dynamic-storage rack into selected dynamic-storage channels. The channels have exits that can be manually reached by an order picker. Items are fed by an order picker at the picker's order-picking station in an order-related manner from a container/box at a selected exit of a dynamic-storage channel to a provided order container. By increasing the number of pickers the storage capacity can be changed freely, and more than one picker can work in the same row at the same time. Therefore, this solution is much more flexible and efficient than the solutions for fully automated warehouses, but it is more expensive at the same time because of its much more demand for manual labor.

US 7,381,022 B1 discloses an automated storage and retrieval system, wherein electrically driven, computer-controlled carriages can navigate a system of rails in three-dimensions. Multiple carriages can independently operate at the same time to accomplish a task faster or to work on several different tasks at the same time. The rails have a system of trap doors that allow a carriage to use a single reversible motor to navigate the rails in three-dimensions. With the carriage in positioned in front of a bin position, the carriage mounted manipulating device can move bins to and from the racks from either side with a single reversible motor. The rails are electrified to provide power for the drive and manipulator motors. A main computer maintains the handless transactions and assigns tasks to the computer-controlled carriages.

Patent publication JP H16 42810 U discloses a cargo handling and storage system comprising a pair of front and rear shelf devices having a large number of article storage shelves provided so as to be spaced apart from each other in the front-rear direction. A travelling vehicle is provided to freely move up and down and right and left between the front and rear shelving devices. The travelling vehicle is guided by a longitudinal rail provided on a support column of the shelf apparatus or guided by a shelf apparatus to a lateral rail provided at a predetermined interval in the height direction rendering the system to be an automatic warehouse.

Patent document DE957200 C discloses a cargo handling system for warehouses according to the preamble of claim 1, in particular, the document discloses a storage device for goods, e.g. similar single items, bulk materials, and in particular for motor vehicles, which consists of at least one juxtaposed and superimposed honeycomb or lattice-like, cell-containing portion, where the cells are accessible from several directions, especially from vertical and horizontal directions.

Therefore, an object of the present invention is to provide a cargo handling system for warehouses, which eliminates the drawbacks of the prior art solutions, but without the use of manual labour, that is no need either transporting storing units (like crates, pallets) containing articles stored in the warehouse to a delivery workstation or lowering the retrieval truck to the ground after each visit done at a storing unit in the warehouse in order to store or deliver stored articles by mechanical power - to save substantial amount of energy, time and live labour as well.

The object above is achieved by providing a cargo handling system for warehouses according to claim 1.

The invention will be further disclosed in details by describing most preferred embodiments of the system according to the invention referring to the attached drawing. In the drawing
**Figure 1** shows a partial view of a preferred embodiment of the automatic cargo handling system for warehouses according to the invention,
**Figure 2** depicts the structure of an embodiment of a retrieval truck, in
**Figure 3** an embodiment of the retrieval truck with wheels engaging track is shown,
**Figure 4** shows arrangements of further tracks, in
**Figure 5** arrangements of further tracks between cargo handling areas are shown, in
**Figure 6** the position of a truck on further tracks between cargo handling areas is shown,
**Figure 7** depicts top view of a warehouse provided with an embodiment of a cargo handling system representing operation of the system according to the invention, and
**Figure 7a** is a front elevational view of Fig. 7.

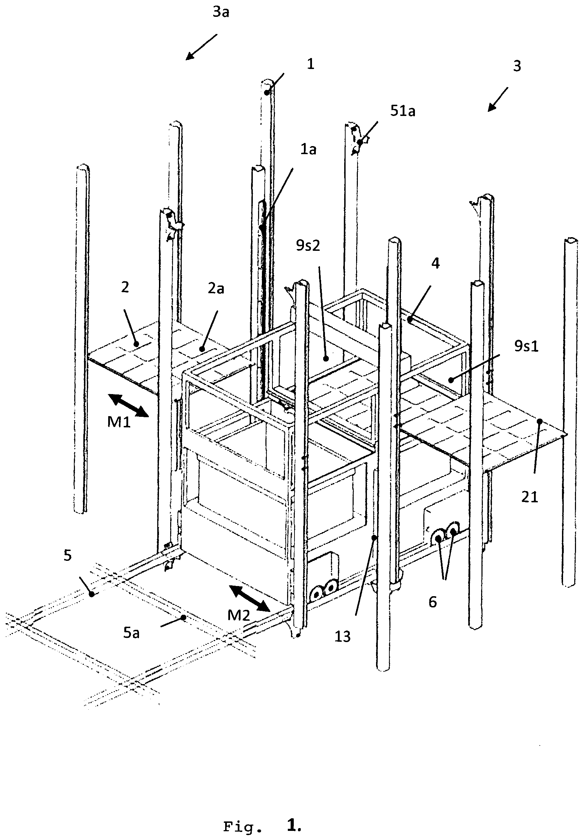

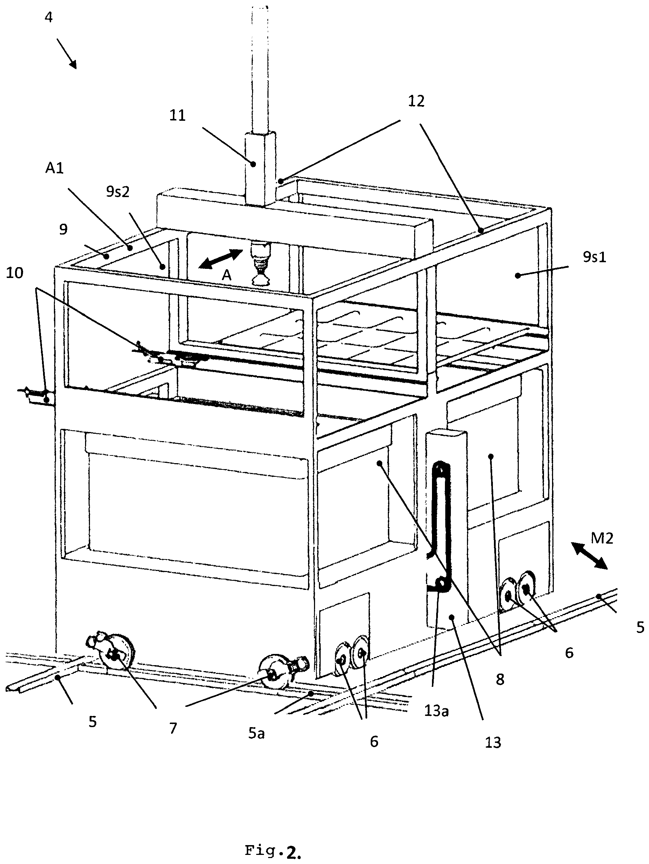

**Fig. 1** shows a partial view of a preferred embodiment of the automatic cargo handling system for warehouses according to the invention. In this embodiment the automatic cargo handling system contains storage units 2 (e.g. crates, containers, pallets or shelves) arranged on columns 1 and a handling equipment formed as a high-lift order picker or retrieval truck 4 movable in a cargo handling area 3 formed between rows of columns 1. In this embodiment a track 5 formed by two parallel rails is arranged parallelly to the lines of columns 1 on the floor of handling area 3. The storage units 2 are preferably displaceable on guiding elements 21 (e.g. L-profiles, roller tables) toward the handling area 3, although the system according to the present invention is feasible by using stable storage units 2 fixed to the columns 1. On surface 2a of each storage unit 2 stored goods or articles are placed, or can be placed. A passive lifting element 1a of a lifting device preferably a toothed rack as seen in Figure 1 is arranged on columns 1, to which an active lifting element 13 of said lifting device arranged on a retrieval truck 4 can be engaged, when a lifting action of the retrieval truck 4 is required to be processed. If the passive lifting element 1a consists of a toothed rack, the active lifting element 13 is provided by a chain belt 13a as seen in Fig. 2, or if the passive lifting element 1a consists of e.g. a rope (not seen in figures) the active lifting element 13 is provided by a rope drum. The retrieval truck 4 can move along the track 5 on wheels 6 fitted with track 5 in the handling area 3.

As it is shown in the figure, a track 5a crossing track 5 is provided outside the loading space 3, extending perpendicularly to the track 5 along the lines of columns, in which the retrieval truck 4 can approach e.g. a further handling area 3a having a track 5 similar to the track 5 on its ground level.

A structure of the retrieval truck 4 is illustrated in **Figure 2****.** In this embodiment the retrieval truck 4 can move along the track 5 by wheels 6 and along the track 5a by wheels 7. Wheels 6, 7 are provided by a drive for moving retrieval truck 4 along the track 5,5a, and for moving the wheels 6, 7 between two positions in an axial direction M2 perpendicular to the side walls 9s1, 9s2 of the retrieval truck 4 . The wheels 7 are vertically movable by the drive between two positions relative to the frame 9 of the retrieval truck 4 , that is a lower and an upper position, and can be fixed in both positions. In this embodiment the retrieval truck 4 has at least two wheels 7 on each sides perpendicular to side walls 9s1, 9s2, only two of which are visible in this figure. When the wheels 7 of the retrieval truck 4 are situated just above the track 5a, while the retrieval truck is supported by the track 5 through its wheels 6, the wheels 7 are positioned in a lower position come in contact with the track 5a and the wheels 6 are lifted off the track 5 together with the retrieval truck 4 . Then the retrieval truck 4 can ride along track 5a on wheels 7 in a direction perpendicular to the handling areas 3,3a. When the wheels 7 are in the upper position, the retrieval truck 4 can ride along track 5 on wheels 6 in the handling area 3,3a.

In a embodiment shown in Figure 2 the retrieval truck 4 is provided with two gathering bins 8 preferably removably fitted to the frame 9 of retrieval truck 4 . In this embodiment storage units 2 are located on leading elements 21, therefore, a tractive element 10 suitable for guiding and holding the storage units 2, e.g. an endless drag chain as shown in the figure, is arranged above gathering bins 8, by means of which the storage unit 2 can be drawn over gathering bins 8 along the leading elements 21 (e.g. L-profiles, guide rolls) in direction M1, that is into the frame 9 of the retrieval truck 4 . The retrieval truck 4 can be formed by more than one gathering bins.

A manipulator 11 movable in a direction A on e.g. a guiding rail 12 arranged on the frame of the retrieval truck 4 can grasp an object disposed in/on a storage unit 2 and lift it even so the storage unit 2 cannot be moved in the direction M1, since the manipulator 11 can be displaced on the guiding rail 12 arranged on the frame and can access the fixed storage unit 2. Manipulator 11 may be also equipped with a device that allows unique identification of individual articles. Grasping the products may be occurred either by vacuum or mechanical forceps arms, or e.g. an electromagnet as well. If the storage unit 2 is pushed back to the leading element 21 (e.g. L-profile, roller line) by the tractive element 10, the given article can be placed by the manipulator 11 into the gathering bin 8.

Since the storage units 2 arranged on guide members 21 or fixed directly to the columns 1 can be displaced at various levels between the columns 1, it may be necessary to lift the retrieval truck 4 within the handling area. To this end, the active lifting element 13 e.g. a cogwheel or roller chain 13a of the retrieval truck 4 engaging a passive lifting member 1a applies a lifting force to the retrieval truck 4 , so that the retrieval truck 4 can be hoisted to the height of a given storage unit 2 displaced on a guide member 21, so that the guide member 21, e.g. L-profile or roller conveyor and the tractive elements 10 get in the same plane. The active lifting element 13 can be moved out of the lateral surfaces 9s1, 9s2 of the retrieval truck 4 so that the active lifting element 13, for example a roller chain 13a can be engaged the passive lifting element 1a e.g. a tooth rack, while it can be withdrawn inside the lateral surfaces 9s1, 9s2 before beginning of any horizontal movement of the retrieval truck 4 .

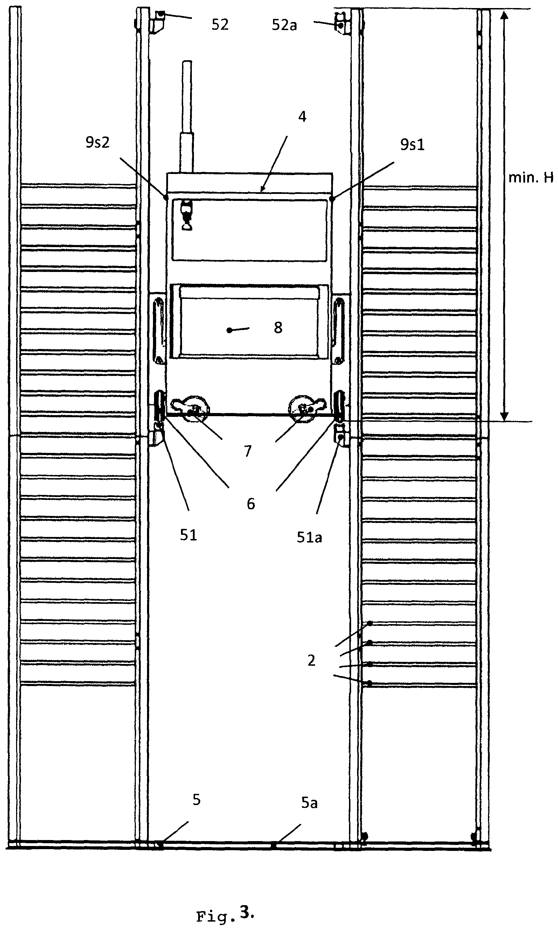

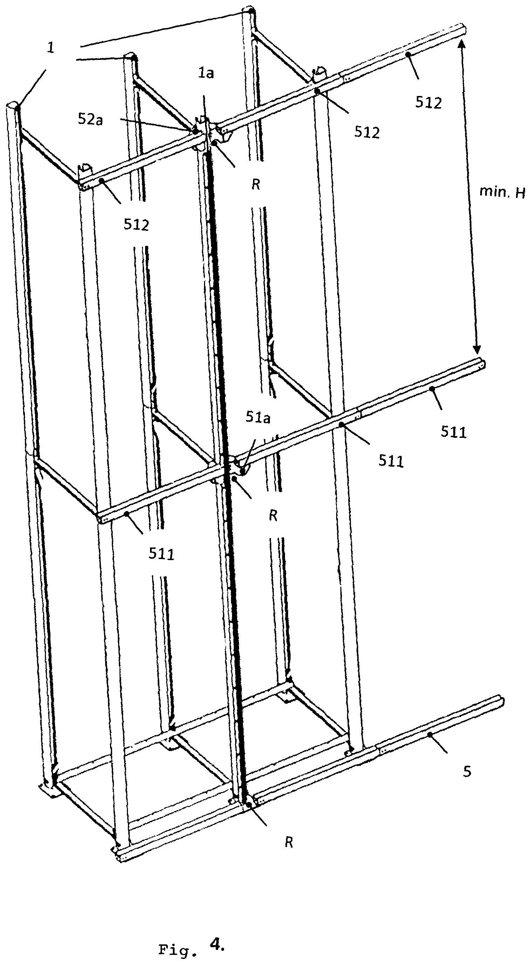

In **Fig. 3** an embodiment of the retrieval truck 4 is shown, the wheels 6 of which are resting on the track 5. In the figure can be seen well that the wheels 6 in this position protrude from the lateral surface 9s1 of the frame 9 of retrieval truck 4 , unlike the situation shown in Figure 2, where the wheels 6 are located within the plane of side surface 9s1. The wheels 6 can be locked in their protruding position shown in Figure 3. Tracks 51 similar to tracks 5 are fixed to columns 1 by brackets 51a. Further tracks 52 can also be mounted on columns 1 at a higher level by brackets 52a. Tracks 51, 52 unlike track 5 are not continuous, since the passive lifting element 1a crosses these tracks 51, 52. Therefore, tracks 51, 52 are interrupted forming a gap R near the passive lifting element 1a as shown in **Fig. 4****,** and then continue.

In a specific embodiment, the width of a gap R between two consecutive track sections 511, 512 of the track 51, 52 are smaller than the diameter of the wheel 6, but larger than the width of the active lifting member 13, so that the wheel 6 can ride over the gap R. However, in a preferred embodiment at least two pairs of wheels 6 are arranged next to each other for each side wall 9s1, 9s2, in a manner shown in Figure 2, the distance of axes of wheels 6 within the pairs is at least equal to or greater than the width of the gap R, so that the retrieval truck 4 can advance on the track 51,52 without any hitch. Use of such higher tracks 51, 52 eliminates the need for the retrieval truck 4 operating on a height of tracks 51,52 to descend to the track 5 in order to access further storage units 2 of farther columns 1 directly inaccessible from a ground track 5. Tracks 51,52 can be arranged in any number and arbitrary heights.

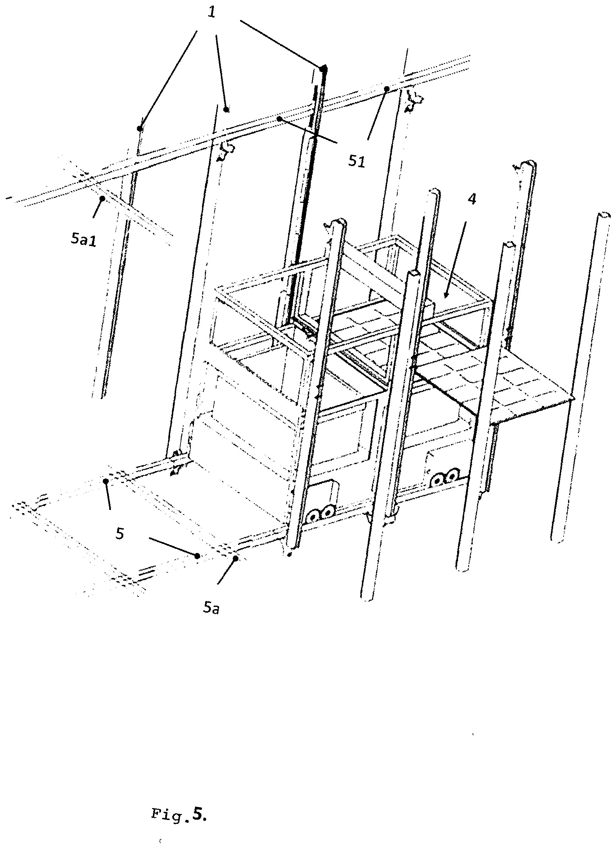

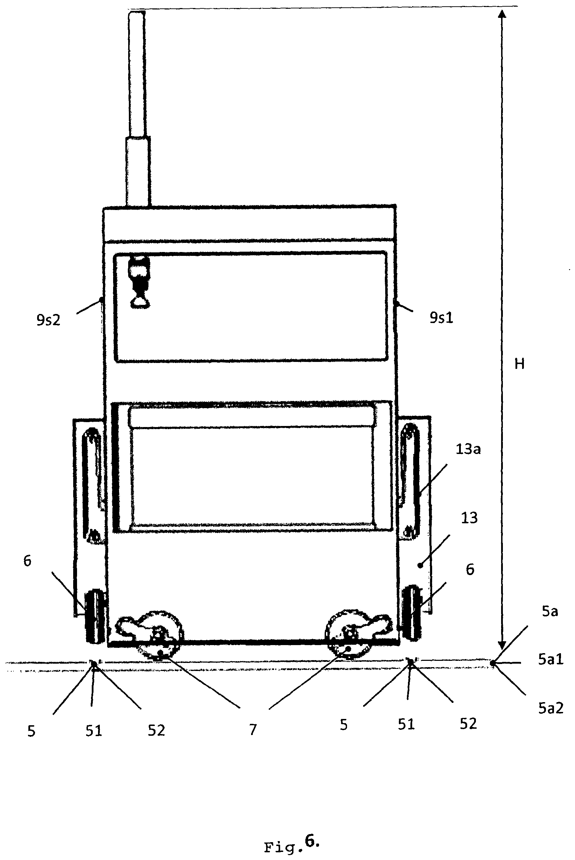

Similarly, tracks 5a1, 5a2 - like tracks 51, 52 above track 5 - are arranged above track 5a as it is shown in Figure 5 between two rows of columns 1 situated perpendicularly to handling areas 3,3a. Tracks 5a1, 5a2 are continuous in the figure, since hoisting the retrieval truck 4 takes place only by passive lifting elements 1a mounted perpendicularly to tracks 51, 52. A minimum difference between heights of tracks 5a, 5a1, 5a2 is at least equal to the total height H of a retrieval truck 4 in lower position (Figure 6) supported by its wheels 7 fits into two adjacent tracks 5a, 5a1, 5a2 along the height of a column 1. Tracks 5a, 5a1, 5a2 are crossed by tracks 5, 51, 52 enabling retrieval truck 4 to access any handling area 3,3a from each track 5a, 51a, 52a.

In Figure 6, the retrieval truck 4 of a height H is positioned on track 5, 5a1, 5a2 with wheels 7 in the lower position on track 5a, 5a1, 5a2, while wheels 6 being in external position protrudes from side walls 9s1, 9s2.

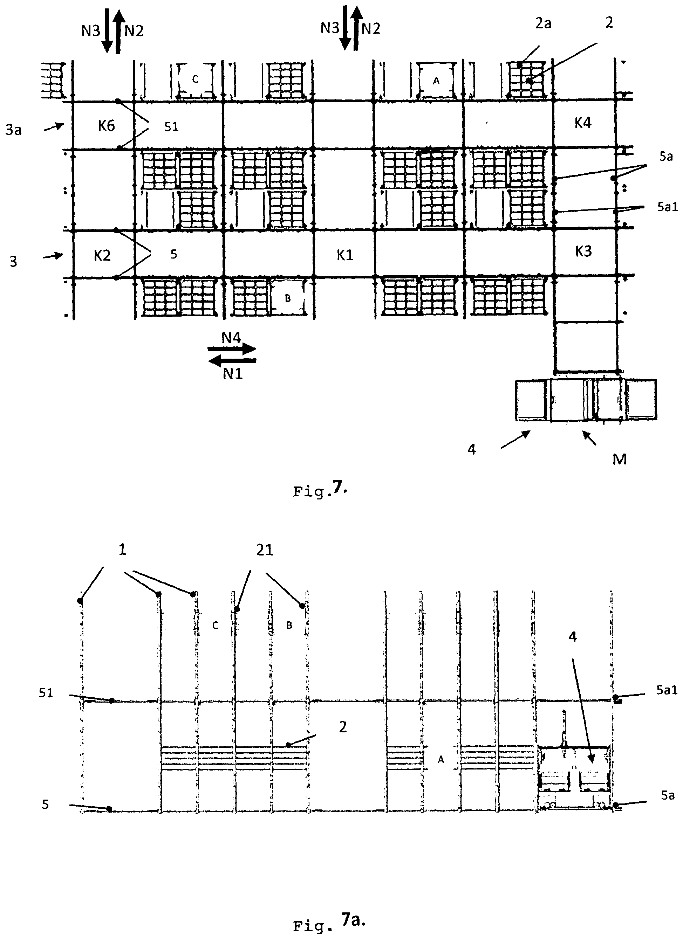

Using the solution described above the retrieval truck 4 does not carry any storage unit 2 from handling area 3, 3a to a workstation M (Fig. 7) where the stored article can be e.g. manually removed from the storage unit 2, but only a receptacle 8 containing collected articles is to be conveyed to the storage units 2 and back to the workstation M.

Thus, the retrieval truck 4 is provided for moving articles stored or to be stored in a storage system of a warehouse according to the invention and contains a machine frame 9, active lifting member 13 mounted thereon, wheels 6 to be engaged on tracks, drive means for driving the wheel as well as means for handling goods or articles. The retrieval truck 4 further comprises: a gathering bin 8 arranged in the frame 9, a wheel 6 movable between two positions along at least an axial direction M2 perpendicular to the lateral surfaces 9s1, 9s2 of the retrieval truck 4 to be engaged with the track 5,51,52 in one of its two positions, and an active hoisting member 13 movable between two positions along said axial direction M2 perpendicular to the lateral surfaces 9s1, 9s2 of the retrieval truck 4 to be engaged in one of its two positions with a passive hoisting member 1a of the cargo handling system, and said means for moving goods comprises a manipulator 11 adapted for moving articles from a storing unit 2 into said gathering bin 8. This design enables the retrieval truck 4 on the one hand to carry only desired commodities in or out the warehouse instead of transporting storage units 2 containing a bulk of similar goods, and on the other hand there is no need for the retrieval truck 4 to descend to the ground of the warehouse in order to reach farther storage units, which is inaccessible from the ground at the same time. Since the retrieval truck 4 can preferably be provided with tractive elements 10 suitable for guiding, holding and moving the storage units 2 in a direction M1 perpendicular to the row of columns 1, the retrieval truck 4 has access to storage units arranged one above the other in a short distance, which perhaps impossible to reach even by hand, thus increasing the storage capacity of the warehouse.

Since the retrieval truck 4 is also provided with wheels 7 movable between lower and upper positions to engage a track 5a,5a1,5a2 formed in an alley connecting and perpendicular to the tracks 5,51,52 of handling areas 3,3a, the retrieval truck 4 can move freely between the handling areas 3, 3a or even in different levels.

In the embodiment shown in Figures the retrieval truck 4 is provided with two gathering bins 8 and a tractive element 10 above each receptacle but may contain several receptacles 8 as well. In this case, the manipulator 11 is preferably arranged movably above the tractive elements 10 on a guiding rail 12 fixed to the machine frame 9 in order to reach the corresponding 8 bins. Of course, the retrieval truck 4 can be provided with more than one manipulator 11. As the gathering bin 8 is preferably detachably connected to the machine frame 9, it can be easily replaced at a workstation M (see Figure 7, 7a.).

The retrieval truck 4 goes about the warehouse on the tracks 5,5a,51,51a,52,5a2 along a predetermined and optimally planned path, in a similar manner to the handling way of a manual warehouse, collecting stored articles to be delivered from storage units 2 in a gathering bin 8 by means of a manipulator 11, but displacing the storage units 2 almost not - that is moving a storage unit 2 from the leading element 21 to the tractive element 10 and back only at most.

Operation of a cargo handling system according to the invention will now be described through an exemplary embodiment of the system provided for a warehouse depicted by its top and side elevational views in Figs 7 (top) and 7a (side), respectively.

In these Figures the retrieval truck 4 is situated next to the delivery/collecting/packaging workstation M. In this example articles A,B,C are to be collected by means of the retrieval truck 4 from three different storage units 2 of the warehouse, then carrying them to the workstation M.

For the retrieval truck 4 article A is stored in a height between the tracks 5 and 51, but article B and C above the track 51.

Retrieval truck 4 leaves the workstation M and rolls on the track 5a on its wheels 7 in a direction of arrow N2. At crossing K4 the truck stops and, after its wheels 7 lifted into upper position, starts to move on its wheels 6 along the track 5, then goes ahead in a direction marked by arrow N1 inside the handling area 3a containing the article A as long as getting its active lifting member 13 aligned with a passive lifting member 1a arranged on a given column 1. In this position its active lifting members 13 (e.g. roller chains 13a) emerge from side walls 9s1,9s2 and engage the passive lifting member 1a (e.g. a toothed rack) and lift the truck 4. After the lifting process was started wheels 6 are getting drawn in behind the plane of walls 9s1,9s2. Lifting process continues so long as the tractive element 10 comes aligned with guiding element 21 supporting a storage unit 2. In that aligned position a tractive element 10 draws the storage unit 2 inside the frame 9 and manipulator 11 grasps the article A stored in the storage unit 2, then the latter is getting pushed back by the tractive element 10 into the guiding element 21. If the storage unit is fixed to the column 1 the manipulator 11 stretches in between the columns 1 to reach the article A and takes it in the bin 8.

Then the truck 4 is lifted further up by the active lifting members 13. As the lowest point of wheel 6 goes beyond above the level of the track 51 situated above the track 5, truck 4 is stopped and moves the wheels 6 into protruding position out of the plane of walls 9s1,9s2. When wheels 6 have already been fixed in that position active lifting elements 13 let the truck 4 descend to the track 51. Drawing back the active lifting element 13 truck 4 starts to run on track 51 in a direction signed by arrow N1 in the handling area 3a containing article C so long as its active lifting element 13 gets aligned with an adequate passive lifting element 1a fixed to a column 1. In this position active lifting elements 13a emerge from the plane of side walls 9s1,9s2 of the track 4 and engage the respective passive lifting elements 1a. At the beginning of lifting the truck 4 draws back the wheels 6 behind the plane of the walls 9s1,9s2 and continues to lift further so long as the tractive element 10 comes aligned with guiding element 21 supporting a storage unit 2 containing article C. In that aligned position a tractive element 10 draws the storage unit 2 inside the frame 9 and manipulator 11 grasps the article C stored in the storage area 2a, then the latter is getting pushed back by the tractive element 10 into the guiding element 21. If the storage unit is fixed to the column 1 the manipulator 11 stretches in between the columns 1 to reach the article C placed on an area 2a and takes it in the bin 8.

Then active lifting elements 13 let the truck 4 descend onto the track 51. Before the level of track 51 is reached wheels 6 move into their protruding position and get fixed, and descending further engage the track 51 similarly as described above. Truck 4 runs on track 51 in a direction signed by arrow N1 up to crossing K6. Then it takes its wheels 7 to a lower end position. The truck 4 runs on the track 51a in a direction of arrow N3 up to crossing K2. In crossing K2 takes its wheels 7 into upper end position and then runs along arrow N4 in the handling area 3 up to the position of the storage unit 2 containing article B so long as its active lifting element 13 gets aligned with an adequate passive lifting element 1a fixed to a column 1. In this position active lifting elements 13a (e.g. roller chains 13a) emerge from the plane of side walls 9s1,9s2 of the track 4 and engage the respective passive lifting elements 1a (e.g. toothed racks), and at the beginning of lifting the truck 4 draws back the wheels 6 behind the plane of the walls 9s1,9s2 and continues to lift further so long as the tractive element 10 comes aligned with guiding element 21 supporting a storage unit 2 containing article B.

In that aligned position a tractive element 10 draws the storage unit 2 inside the frame 9 and manipulator 11 grasps the article B stored in the storage area 2a, then the latter is getting pushed back by the tractive element 10 into the guiding element 21. If the storage unit is fixed to the column 1 the manipulator 11 stretches in between the columns 1 to reach the article B placed on an area 2a and takes it in the bin 8.

Then active lifting elements 13 let the truck 4 descend. Before the level of track 5 is reached wheels 6 move into their protruding position and get fixed. Truck 4 descending further to engage the track 5 and runs along arrow N4 up to crossing K3. At crossing K3 the wheels 7 of the truck 4 move into their lower position. The truck 4 returns in the workstation running on track 5a by its wheels 7 in a direction of arrow N3 and the articles collected are removed from the bin 8 at the workstation M.

Of course, the process as described above is suitable not only for collecting stored articles A,B,C, but also carrying articles A,B,C to be stored in the storage units 2 of the warehouse.

At the workstation M articles A,B,C can be removed from/ taken into the bin 8 of the truck 4, but preferably the bin 8 itself can be removed from the truck 4 and replaced to another bin 8 being empty / containing articles to be stored. Then the truck 4 is ready for taking a new journey in the warehouse, which can be different from above path depending on the place of storing of articles to be stored / retrieved. Therefore, the system according to the invention is preferably provided by a programmable control unit controlling automatically or remotely the operation of truck 4 according to route-plans previously uploaded.

Power supply of the truck 4 can be provided e.g. by accumulators arranged onboard. The cargo handling system for warehouses according to the invention can operate more than one truck 4 at the same time, which can bypass each other on different tracks 5, 51, 52, 5a, 5a1, 5a2.

The most important advantage of the cargo handling system for warehouses according to the invention is that it eliminates the drawbacks of the prior art solutions, but without the use of manual labor, that is no need either transporting storing units 2 (like crates, pallets) containing articles A,B,C stored in the warehouse to a delivery workstation M or lowering the retrieval truck to the ground after each visit done at a storing unit 2 in the warehouse in order to store or deliver stored articles A,B,C by mechanical power. This solution saves substantial amount of energy, time and live labour as well, since the truck 4 is capable of either placing or removing even a single item in a storage unit 2 (e.g. a crate, a pallet) arranged in a shelf system, and forwarding the collected items to a delivery workstation or transporting items or goods to be stored to a predetermined storage unit placed in the storage shelving system, while other trucks 4 accomplish similar operations in the same warehouse.

## Claims

1. Cargo handling system for warehouses, comprising more than two rows of columns (1) arranged parallelly, cargo handling areas (3) formed therebetween, storing units (2) arranged on the columns (1), a track (5) installed in the cargo handling area (3) and consisting preferably of two parallel rails arranged parallelly to the rows of columns (1), at least one retrieval truck (4) movable in said cargo handling area (3), and a passive hoisting member (1a) of a hoisting device connectable to an active hoisting member (13) of a hoisting device mounted on the retrieval truck (4), wherein the passive hoisting member (1a) is arranged on the columns (1), the system being further provided with a control unit controlling the movement of the retrieval truck (4), at least one further track (51,52) arranged in the handling area and fixed to the columns (1) parallelly to the track (5), wherein the track (51, 52) is discontinuated by a gap (R) in the vicinity of said passive hoisting member (1a), and wherein the retrieval truck (4) comprises: wheels (6) to be fitted in the tracks (5,51,52) and movable between at least two positions taken in an axial direction (M2) perpendicular to the lateral surfaces (9s1, 9s2) of the retrieval truck (4), a drive for rotating and moving the wheels (6) in the axial direction (M2), a further drive for operating and moving the active hoisting member (13) of the hoisting device between two positions taken in said axial direction (M2) perpendicular to the lateral surfaces (9s1, 9s2) of the retrieval truck (4), the system further comprising tracks (5a) formed by two parallel rails arranged perpendicularly to the rows of columns (1) for guiding the retrieval truck (4), wherein the track (5a) perpendicularly arranged to the rows of columns (1) and a track (5, 51, 52) arranged parallelly to the rows of columns (1) constitue a crossing (K3, K4), and wherein the retrieval truck (4) is further provided with wheels (7) to be fitted to the track (5a) perpendicularly arranged to the rows of columns (1) and movable between two different positions along a height (H) of the retrieval truck (4), and a driving unit for driving and moving said wheels (7) between the two positions, ***characterized in that*** the retrieval truck (4) further comprises a gathering bin (8) and a manipulator (11) adapted for moving articles from a storing unit (2) into said gathering bin (8), **in that** the system also comprises at least one further track (5a1,5a2) arranged perpendicularly to the rows of columns (1), **in that** a vertical distance between the tracks (5a,5a1,5a2) perpendicularly arranged to the rows of columns (1) is at least equal to the height (H), and **in that** the further track (5a1,5a2) arranged perpendicularly to the rows of columns (1) and the track (5,51,52) arranged parallelly to the rows of columns (1) constitute a crossing (K1,K2,K3,K4,K6).

2. The cargo handling system for warehouses according to claim 1, ***characterized in that*** a vertical distance between tracks (5,51,52) arranged parallelly to the rows of columns (1) is at least equal to the height (H).

3. The cargo handling system for warehouses according to claim 2, ***characterized in that*** said manipulator (11) adapted for moving articles is arranged on a guiding rail (12) formed on a frame (9) of the retrieval truck (4).

4. The cargo handling system for warehouses according to claim 3, ***characterized in that*** the retrieval truck (4) is provided with at least two pairs of wheels (6) on each of its lateral surface (9s1, 9s2), wherein the distance of the axes of the wheels (6) in each pair of wheels (6) is at least equal to or greater than a width of the gap (R).

5. The cargo handling system for warehouses according to claim 4, ***characterized in that*** the storing units (2) are arranged movably in a direction (M1) toward the handling area (3) on a guiding element (21) fixed to the column (1), and the retrieval truck (4) is provided with a tractive element (10) suitable for guiding, retaining as well as driving the storing units (2) in perpendicular direction (M1) to the rows of columns (1).

6. The cargo handling system for warehouses according to claim 5, ***characterized in that*** said gathering bin (8) is releasably clamped to the retrieval truck (4).

7. The cargo handling system for warehouses according to any of claims 3-6 , ***characterized in that*** the tractive element (10) is arranged above the gathering bin (8), and said manipulator (11) is mounted on said guiding rail (12) attached to the frame (9) above the tractive element (10).

## Patentansprüche

1. Ladungsumschlagsystem für Lager, umfassend mindestens zwei parallel angeordneten Reihen von Säulen (1), Ladungsumschlagbereiche (3), die zwischen den Reihen von Säulen ausgebildet sind, auf den Säulen (1) angeordnete Aufbewahrungseinheiten (2), ein im Ladungsumschlagbereich (3) installiertes Gleis (5), das vorzugsweise aus zwei parallelen Schienen besteht, die parallel zu den Reihen von Säulen (1) angeordnet sind, mindestens einen Bedienwagen (4), der im genannten Ladungsumschlagbereich (3) bewegt werden kann, und ein passives Hebeglied (1a) einer Hubvorrichtung, die mit einem aktiven Hebeglied (13) einer an dem Bedienwagen (4) montierten Hubvorrichtung verbindbar ist, wobei das passive Hebeglied (1a) an den Säulen (1) angeordnet ist, das System ist weiterhin mit einer Steuereinheit versehen, die die Bewegung des Bedienwagens (4) steuert, und mindestens einem weiteren Gleis (51, 52) versehen, das in dem Ladungsumschlagbereich (3) angeordnet ist und an den Säulen (1) parallel zu dem Gleis (5) befestigt ist, wobei das Gleis (51, 52) durch einen Spalt (R) in der Nähe des genannten passiven Hebegliedes (1a) unterbrochen ist, und wobei der Bedienwagen (4) umfasst: in die Gleise (5, 51, 52) einzupassende Räder (6), die zwischen mindestens zwei in einer axialen Richtung (M2) senkrecht zu den Seitenflächen (9s1, 9s2) des Bedienwagens (4) eingenommenen Positionen bewegbar sind, einen Antrieb zum Drehen und Bewegen der Räder (6) in axialer Richtung (M2), einen weiteren Antrieb zum Betreiben und Bewegen des aktiven Hebegliedes (13) der Hebevorrichtung zwischen zwei Positionen, die in einer axialen Richtung (2) senkrecht zu den Seitenflächen (9s1, 9s2) des Bedienwagens (4) eingenommen sind, das System umfasst weiterhin Gleise (5a), die aus zwei parallelen Schienen gebildet sind, die senkrecht zu den Reihen von Säulen (1) angeordnet sind, um den Bedienwagen (4) zu führen, wobei das senkrecht zu den Reihen von Säulen (1) angeordnete Gleis (5a) und ein parallel zu den Reihen von Säulen (1) angeordnetes Gleis (5, 51, 52) eine Kreuzung (K3, K4) bilden, und wobei der Bedienwagen (4) mit in das Gleis (5a) einzupassende Rädern (7) versehen ist, das senkrecht zu den Reihen von Säulen (1) angeordnet ist, und zwischen zwei verschiedenen Positionen entlang einer Höhe (H) des Bedienwagens (4) bewegbar ist, und mit einer Antriebseinheit versehen ist zum Antrieb und Bewegen genannter Räder (7) zwischen den zwei verschiedenen Positionen, **dadurch gekennzeichnet, dass** der Bedienwagen (4) umfasst weiterhin einen Sammelbehälter (8) und einen Manipulator (11) zum Bewegen von Artikeln von einer Aufbewahrungseinheit (2) in den genannten Sammelbehälter (8), dass das System mindestens ein weiteres Gleis (5a1, 5a2) aufweist, das senkrecht zu den Reihen von Säulen (1) angeordnet ist, dass ein vertikaler Abstand zwischen den Gleisen (5a, 5a1, 5a2), die senkrecht zu den Reihen von Spalten (1) angeordnet sind, mindestens der Höhe (H) entspricht, und dass das weitere Gleis (5a1, 5a2), das senkrecht zu den Reihen von Spalten (1) angeordnet ist, und das Gleis (5a1, 5a2), das parallel zu den Reihen von Spalten (1) angeordnet ist, eine Kreuzung (K1, K2, K3, K4, K6) bilden.

2. Ladungsumschlagsystem für Lagerhäuser nach Anspruch 1, **dadurch gekennzeichnet, dass** ein vertikaler Abstand zwischen parallel zu den Reihen von Säulen (1) angeordneten Gleisen (5, 51, 52) mindestens der Höhe (H) entspricht.

3. Ladungsumschlagsystem für Lagerhäuser nach Anspruch 2, **dadurch gekennzeichnet, dass** der Manipulator (11), der zum Bewegen von Artikeln eingerichtet ist, an einer Führungsschiene (12) angeordnet ist, die an einem Rahmen (9) des Bedienwagens (4) ausgebildet ist.

4. Ladungsumschlagsystem für Lagerhäuser nach Anspruch 3, **dadurch gekennzeichnet, dass** der Ladewagen (4) an jeder seiner Mantelfläche (9s1, 9s2) mit mindestens zwei Radpaaren (6) versehen ist, wobei der Abstand der Achsen der Räder (6) in jedem Paar von Rädern (6) mindestens gleich oder größer als eine Breite des Spalts (R) ist.

5. Ladungsumschlagsystem für Lagerhäuser nach Anspruch 4, **dadurch gekennzeichnet, dass** die Aufbewahrungseinheiten (2) in einer Richtung (M1) in Richtung auf den Ladungsumschlagbereich (3) an einem Führungselement (21) bewegbar angeordnet sind, das an der Säule (1) befestigt ist, und der Bedienwagen (4) mit einem Zugelement (10) versehen ist, das die Aufbewahrungseinheiten (2) führen, halten sowie antreiben kann in einer zu den Reihen von Säulen (1) senkrechten Richtung (M1).

6. Ladungsumschlagsystem für Lagerhäuser nach Anspruch 5, **dadurch gekennzeichnet, dass** der genannte Sammelbehälter (8) lösbar an dem Bedienwagen (4) festgeklemmt ist.

7. Ladungsumschlagsystem für Lagerhäuser nach einem der Ansprüche 3-6, **dadurch gekennzeichnet, dass** das Zugelement (10) über dem Sammelbehälter (8) angeordnet ist, und der Manipulator (11) an der genannten Führungsschiene (12) montiert ist, die an dem Rahmen (9) über dem Zugelement (10) befestigt ist.

## Revendications

1. Système de manutention de cargaison pour entrepôts, comprenant
au moins deux rangées de colonnes (1) disposées en parallèle,
zones de manutention de cargaison (3) formées entre les rangées de colonnes,
unités de stockage (2) disposées sur les colonnes (1),
une piste (5) installée dans la section de la zone de manutention de cargaison (3), constituée de préférence de deux rails parallèles disposés parallèlement aux rangées de colonnes (1),
au moins un chariot du transport (4) pouvant être déplacé dans ladite zone de manutention de cargaison (3), et
un élément de levage passif (1a) d'un dispositif de levage pouvant être connecté à un élément de levage actif (13) d'un dispositif de levage monté sur le chariot du transport (4),
dans lequel l'élément de levage passif (1a) est disposé sur les colonnes (1),
le système est en outre équipé d'une unité de commande qui commande le mouvement du chariot du transport (4), et est équipé au moins une autre piste (51, 52) située dans la partie zone de manutention de cargaison (3) et fixée aux colonnes (1) parallèlement à la piste (5), dans lequel la piste (51, 52) est interrompue par un écart (R) au voisinage dudit élément de levage passif (la), et dans lequel le chariot du transport (4) comprend: une pluralité de roues (6) à monter dans les pistes (5, 51, 52) et mobiles entre au moins deux positions prises dans une direction axiale (M2) perpendiculaires aux surfaces latérales (9s1, 9s2) du chariot du transport (4);
un entraînement pour faire tourner et déplacer les roues (6) dans la direction axiale (M2),
ayant un autre entraînement pour faire fonctionner et déplacer l'élément de levage actif (13) du dispositif de levage entre deux positions prises dans une direction axiale (2) perpendiculaire aux surfaces latérales (9s1, 9s2) du chariot du transport (4),
le système comprend en outre des pistes (5a) formées de deux rails parallèles disposés perpendiculairement aux rangées de colonnes (1) pour guider le chariot du transport (4),
la piste (5a) disposée perpendiculairement aux rangées de colonnes (1) et une piste (5, 51, 52) disposée parallèlement aux rangées de colonnes (1) forment une croisement (K3, K4), et
dans lequel le chariot du transport (4) est pourvu de roues (7) à monter dans la piste (5a) disposées perpendiculairement aux rangées de colonnes (1) et est mobile entre deux positions différentes sur une hauteur (H) du chariot du transport (4), et est pourvu d'une unité d'entraînement pour entraîner et déplacer lesdites roues (7) entre les deux positions différentes,
***caractérisé***
***en ce que*** le chariot du transport (4) comprend en outre un récipient collecteur (8) et un manipulateur (11) pour déplacer des articles d'une unité de stockage (2) dans ledit récipient collecteur (8),
***en ce que*** le système comporte au moins une autre piste (5a1, 5a2) disposée perpendiculairement aux rangées de colonnes (1),
*en ce qu*'une distance verticale entre les pistes (5a, 5a1, 5a2) disposées perpendiculairement aux rangées de colonnes (1) correspond au moins à la hauteur (H), et
***en ce que*** la piste (5a1, 5a2) supplémentaire disposée perpendiculairement aux rangées de colonnes (1) et la piste (5a1, 5a2) disposée parallèlement aux rangées de colonnes (1) forment une croisement (K1, K2, K3, K4, K6).

2. Système de manutention de cargaison d'entreposage selon la revendication 1, ***caractérisé en ce qu*** 'une distance verticale entre les rangées de colonnes (1) disposées parallèlement aux colonnes (5, 51, 52) est au moins égale à la hauteur (H).

3. Système de manutention de cargaison d'entreposage selon la revendication 2, ***caractérisé en ce que*** le manipulateur (11) apte à déplacer des articles est agencé sur un rail de guidage (12) formé sur un châssis (9) du chariot (4).

4. Système de manutention de cargaison d'entreposage selon la revendication 3, ***caractérisé en ce que*** le wagon de chargement (4) est muni d'au moins deux paires de roues (6) sur chacune de ses faces latérales (9s1, 9s2), l'écartement des axes des roues (6) dans chaque paire de roues (6) est au moins égale ou supérieure à une largeur de l'écart (R).

5. Système de manutention de cargaison d'entreposage selon la revendication 4, ***caractérisé en ce que*** les unités de stockage (2) sont agencées de manière mobile dans une direction (M1) en direction de la zone de transfert de cargaison (3) sur un élément de guidage (21) fixé à la colonne (1), et le chariot de manoeuvre (4) est pourvu d'un élément de traction (10) qui guide, maintient et peut entraîner les unités de stockage (2) dans une direction (M1) perpendiculaire aux rangées de colonnes (1).

6. Système de manutention de cargaison d'entreposage selon la revendication 5, ***caractérisé en ce que*** ledit conteneur collecteur (8) est serré de manière amovible sur le chariot de manoeuvre (4).

7. Système de manutention de cargaison d'entreposage selon l'une quelconque des revendications 3 à 6, ***caractérisé en ce que*** l'élément de traction (10) est disposé au-dessus du conteneur collecteur (8) et le manipulateur (11) est monté sur ledit rail de guidage (12) fixé au châssis (9) est fixé au-dessus de l'élément de traction (10).
